# EUROPEAN PATENT SPECIFICATION

(11) **EP 4 364 822 B1**
(45) Date of publication and mention of the grant of the patent: **03.12.2025**
(21) Application number: 22832248.3
(22) Date of filing: 21.06.2022
(51) Int. Cl.: B01D 25/02, B01D 35/16, B01D 29/96

(54) **ATTACHMENT AND REMOVAL SYSTEM FOR FILTER CARTRIDGES IN A SUPPORT PLATE OF AN APPARATUS FOR FILTERING A LIQUID FLUID**
BEFESTIGUNGS- UND ENTFERNUNGSSYSTEM FÜR FILTERPATRONEN IN EINER TRÄGERPLATTE EINER VORRICHTUNG ZUM FILTERN EINER FLÜSSIGKEIT
SYSTÈME DE FIXATION ET D'EXTRACTION POUR CARTOUCHES FILTRANTES DANS UNE PLAQUE SUPPORT D'UN ÉQUIPEMENT DE FILTRATION D'UN FLUIDE LIQUIDE

(30) Priority: 01.07.2021 ES 202131374 U
(43) Date of publication of application: 08.05.2024
(73) Proprietor: Fluytec, S.A., 48950 Erandio (Vizcaya) (ES)
(72) Inventor: OTEGUI MARTÍNEZ, Marta, 48950 Erandio (Vizcaya) (ES); OURO BEASCOECHEA, Alejandro, 48950 Erandio (Vizcaya) (ES); MESA CUEVAS, Unai, 48950 Erandio (Vizcaya) (ES)
(74) Representative: Ungria López, Javier
(86) International application number: PCT/ES2022/070390
(87) International publication number: WO 2023/275418

(56) References cited:
- WO-A1-2019/086814
- CN-A- 105 327 569
- CN-U- 209 076 164
- KR-A- 20120 138 464
- US-A1- 2015 343 349

## Description

### Object of the invention

The present invention relates to a fixing and removal system for filter cartridges in a support plate of liquid fluid filtration equipment. The system of the invention substantially facilitates the assembly, as well as the disassembly, of the filter cartridges, while at the same time optimizing the space of the filtration equipment in which said filter cartridges are installed. Complete leaktightness is also achieved in the coupling of the filter cartridges in coincidence with through holes in the support plate in which said filter cartridges are installed.

### Background of the invention

Currently, filtration equipment for large liquid fluid flow rates consists of a ferrule in the inner space of which filtration cartridges are installed.

These filtration cartridges are generally assembled on a support plate which is installed inside the ferrule. Said filtration cartridges are assembled in coincidence with through holes included in the support plate, such that it is convenient to ensure a minimum distance between the filtration cartridges so as not to weaken the support plate, taking into account the forces to which said support plate is subjected.

The assembly of the filtration cartridge on the support plate is performed by means of using a tubular fixing head which is installed in coincidence with each through hole of the support plate; wherein the filtration cartridge is inserted into the inner space of said fixing head.

This fixing head has a conical inner surface, which favors the tight fixing of the filtration cartridge when it is inserted into the fixing head.

Likewise, the filtration cartridge has a built-in sealing gasket that further ensures its fixing.

The fixation head has coupled thereto a basket (generally by means of a clipping engagement system) which is used as a guide to facilitate the introduction of the filtration cartridge into the fixation head and to maintain its orientation within the filtration equipment.

The working mode of these filtration cartridges is from the inside out, wherein fluid enters through the central inner space of the filtration cartridge and filters out through the tubular filtration wall of the cartridge.

After a certain number of hours of work, these filtration cartridges must be replaced with new ones, such that they must be disengaged from the inner space of the fixing head in order to be able to remove them, these operations entailing certain difficulties.

Current fixing systems have the following problems:
Due to the working pressure of the liquid fluid inside the filter cartridges, and considering the inside-out filtering performed by these cartridges, these filter cartridges become very tightly embedded in the fixing heads, which makes their removal difficult.

Sometimes, the tight fixing of the filtration cartridges on the fixing heads is such that in the removal operation the handle of the filtration cartridges breaks, making their removal even more difficult.

Other times, the pressure of the liquid fluid inside the filter cartridges is such that the cartridges end up deforming, passing through the fixing head and the support plate, and even getting into the ferrule, which makes their removal even more difficult. It should be pointed out that in this case the entire filtration equipment must be disassembled, with the economic costs that this entails, not only due to the labor used, but also to the fact that the filtration equipment is stopped during the entire repair period.

Another problem is related to the basket, which is rather fragile, which causes the breakage thereof and therefore the generation of debris that must be removed from inside the equipment, with it being highly recommended to pay special attention not to leave any debris.

Lastly, another problem of current fixing systems relates to the dimension of the fixing head, particularly its diameter, which determines the configuration of the support plate. Taking into account the safety distance that must be maintained between the through holes of the support plate, the fact that said through holes have a diameter that matches the diameter of the fixing head limits the number of filter cartridges that can be installed in the support plate. The diameter of each through hole of the support plate (determined by the diameter of the fixing head), must necessarily be greater than the diameter of the filter cartridge, which inevitably affects the configuration of the support plate, minimizing the useful space of the support plate and therefore limiting its design.
It is known, from the state of the art, document CN105327569 which discloses an attaching system for a filter cartridge including top cap configured to attach to a filter cartridge; a mating projection located on the top cap; at least one locking projection projecting radially away from the mating projection; and a base portion defining an annularly shaped flat surface surrounding the mating projection on a first side and configured to attach to the filter cartridge on a second side. It also discloses a method of attaching a filter cartridge to a filter assembly including the steps of providing locking projections on a top cap of a filter cartridge; locating a spring around a mating projection of the top cap; forming annular groove between the spring and the locking projections; and configuring the top cap to a portion of the filter cartridge.

### Description of the invention

In order to achieve the objectives and prevent the drawbacks mentioned in the previous sections, the invention proposes a fixing and removal system for filter cartridges in a support plate of liquid fluid filtration equipment comprising an annular female element and an annular male element which are configured to be assembled in coincidence with a stepped opening located around each of the through holes of the support plate, for installing a filter cartridge in coincidence with the through hole.

An end segment of the filter cartridge is tightly fitted in a hermetically sealed manner inside a frustoconical inner space of the male element.

The stepped opening comprises a side area and a front seat area on which the assembly of the female element and the male element is supported.

The female element and the male element have circular-shaped annular structures including inner side surfaces and outer side surfaces; wherein the male element is configured for being coupled inside the female element by means of a threaded coupling.

Said threading has a length such that it allows threading until the upper front surfaces of the male element and the female element contact one another, eliminating any possible clearance and preventing over-tightening between the male element and the female element, which would subsequently make it difficult to remove the filter cartridge.

The female element is in contact with at least a part of the surface of the stepped opening of the support plate.

The tight fitting of the end segment of the filter cartridge inside the frustoconical inner space of the male element includes a hermetic seal comprising a sealing gasket housed in an annular groove located in the end segment of the filter cartridge; wherein said sealing gasket is in contact with the inner side surface that delimits the frustoconical inner space of the male element.

The outer side surface of the female element is attached to the side surface of the stepped opening of the support plate by means of an adhesive or another equivalent type of attachment. The attachment between both contacting side surfaces is reinforced by means of a ribbing incorporated on the outer side surface of the female element.

The female element includes a continuous diametrical extension which is configured for being supported on the support plate, whereas the male element includes a diametrical extension which is configured for being supported on the continuous diametrical extension of the female element. The diametric extension of the male element includes slots.

The end segment of the filter cartridge includes radial stops protruding outwardly from the filter cartridge above the male element; wherein said radial stops are configured for preventing an axial movement of the filter cartridge towards the inner space of the filtration equipment.

In one embodiment, the male element includes at the lower end of its inner side surface a continuous diametrical extension which is configured so that the end segment of the filter cartridge is supported thereon. In this way, safety is increased to prevent the axial movement of the filter cartridge towards the inner space of the filtration equipment.

The system of the invention further comprises a tool to carry out the removal of the filter cartridges; wherein the tool comprises at least some flanges located in coincidence with a circumferential annular edge which is part of a tubular body of the tool; wherein the flanges are configured for fitting into the slots of the male element during use of the tool to enable rotating the male element; wherein said slots are located in the diametrical extension of the male element.

The tool further comprises a double radial handle which is externally attached to the tubular body and a diametrical rod which goes through the inside of the tubular body. The center of said diametrical rod is attached to a support by means of a screw and a nut; wherein said support is configured for being fitted on a handle of the filter cartridge.

It should be pointed out that in the present invention neither a fixing head nor a basket is required as occurs with the filter cartridge fixing systems of the state of the art.

Next, to help better understand this specification and as an integral part thereof, a series of figures is attached in which the object of the invention is depicted in an illustrative and non-limiting manner.

### Brief description of the figures

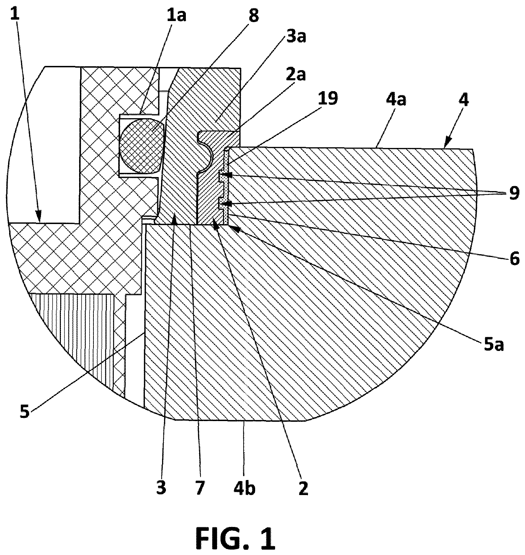

**Figure 1** shows a section view of the fixing system for filter cartridges in a support plate of liquid fluid filtration equipment, object of the invention.

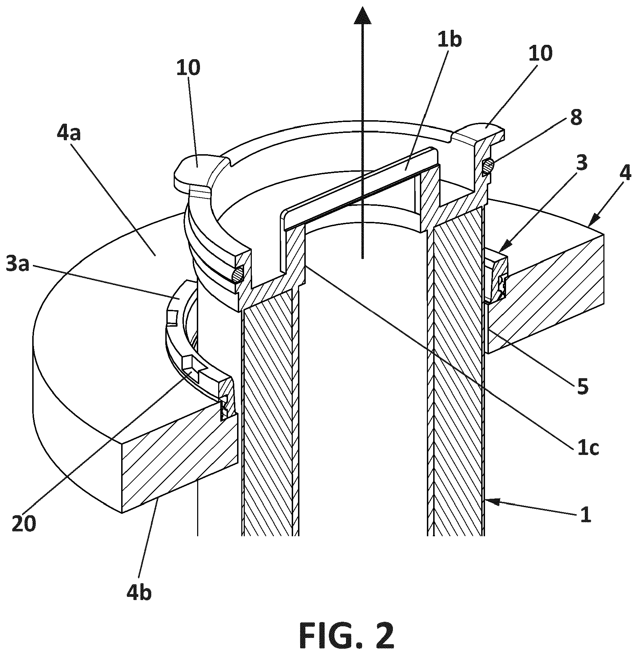

**Figure 2** depicts a perspective view of the fixing system of the invention, in which the process for removing the filter cartridge is shown, in one of the possible ways of removal.

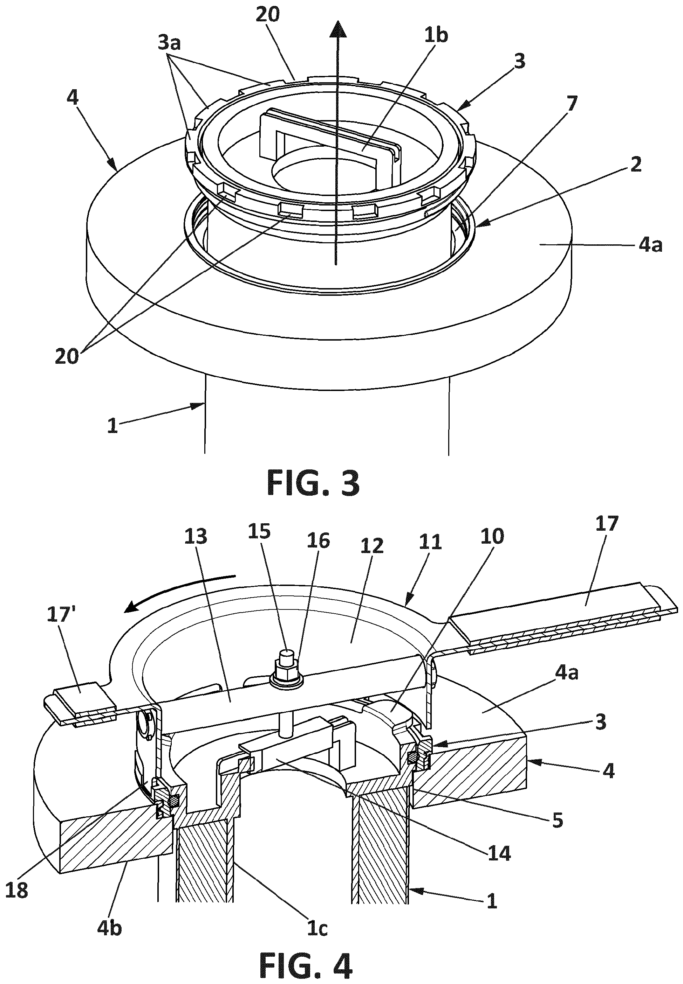

**Figure 3** depicts a perspective view of the fixing system of the invention, in which the process for removing the filter cartridge is shown, in another one of the possible ways of removal.
**Figure 4** shows a perspective view of the tool used to remove the filter cartridge.

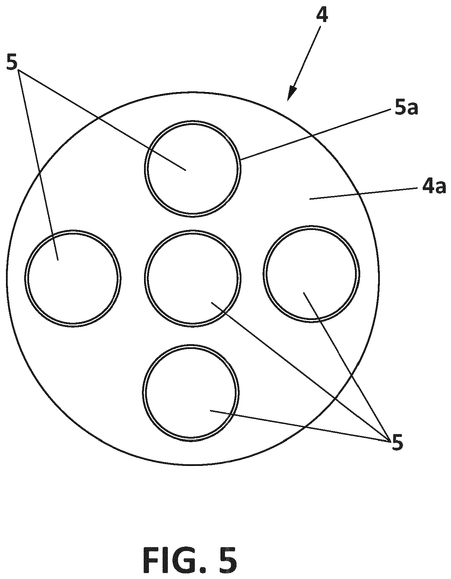

**Figure 5** shows a plan view of a support plate with several through holes, in coincidence with which the filter cartridges are installed.
**Figure 6** shows a section view of the fixing system for filter cartridges in a support plate of liquid fluid filtration equipment, in another embodiment of the invention.

### Description of an exemplary embodiment of the invention

Considering the numbering used in the figures, the fixing system for filter cartridges (1) in a support plate (4) of liquid fluid filtration equipment comprises a female element (2) and a male element (3) which are configured to be assembled in coincidence with a stepped opening (5a) located around each of the through holes (5) of the support plate (4) to enable the installation of the filter cartridge (1) in the through hole (5); wherein an end segment of the filter cartridge (1) is tightly fitted on the male element (3); and wherein said end segment includes an opening (1c) which communicates with an inner space of the filter cartridge (1).

The female element (2) and the male element (3) have circular-shaped annular structures including inner side surfaces and outer side surfaces; wherein the male element (3) is configured for being coupled inside the female element (2) by means of a threaded coupling.

The stepped opening (5a) is located in coincidence with a first face (4a) of the support plate (4) which is opposite a second face (4b) of said support plate (4), with respect to which the largest part of the filter cartridge (1) protrudes.

The stepped opening (5a) coinciding with the through hole (5) comprises a side surface (6) and a front seat surface (7) on which the assembly of the female element (2) and the male element (3) is supported.

The female element (2) has a threaded inner side surface which complements the threaded outer side surface of the male element (3); whereas the female element (2) has the outer side surface fitting on the side surface (6) of the stepped opening (5a).

The outer side surface of the female element (2) is attached to the side surface (6) of the stepped opening (5a) by means of an adhesive (19) to thus achieve greater adherence in the attachment between both contacting surfaces, which is reinforced by means of ribbing (9) incorporated on said outer side surface of the female element (2).

The male element (3) has a frustoconical configuration on its inner side surface on which the end segment of the filter cartridge (1) fits tightly by means of a sealing gasket (8) housed in an annular groove (1a) located in the end segment of said filter cartridge (1).

Said frustoconical configuration facilitates the assembly and disassembly of the filter cartridge (1) and also its fixing and immobilization.

The female element (2) includes a continuous diametrical extension (2a) which is supported on the first face (4a) of the support plate (4), whereas the male element (3) includes a diametrical extension (3a) which is supported on the continuous diametrical extension (2a) of the female element (2). The diametrical extension (3a) of the male element (3) includes slots (20).

The coupling between the end segment of the filter cartridge (1) and the inner side surface of the male element (3) is a hermetic coupling due to the closure generated by the contact between the sealing gasket (8) on the inner side surface of the male element (3).

The filter cartridge (1) is inserted into the male element (3) just as it is introduced in the fixing heads of current systems, so the filter cartridges (1) do not have to be modified in any way, with this system of the invention therefore also being valid for the filter cartridges (1) existing on the current market.

The threaded coupling of the male element (3) on the female element (2) is limited by the dimensions of the thread, such that the thread has a specific length, such that the threading of the male element (3) into the female element (2) is allowed until the diametrical extension (3a) of the male element (3) and the diametrical extension (2a) of the female element (2) contact one another, eliminating any possible clearance and preventing excessive tightening between the element male (3) and the female element (2) which then makes it difficult to remove the filter cartridge (1).

The system of the present invention has two operating options.

The first option consists of a normal removal of the filter cartridge (1) by pulling a handle (1b) integral with the filter cartridge (1) which is located in coincidence with its opening; wherein in this case the coupling of the filter cartridge (1) on the male element (3) is a coupling with a normal tightening.

The second option occurs when the filter cartridge (1) is very tightly fitted in the male element (3), that is, with a high tightening. In this case, unscrewing the male element (3) from the female element (2), which remains attached to the support plate (4), is enough to remove the filter cartridge (1). Due to the dimension of the thread, which prevents over-tightening, the removal of the filter cartridge (1) is simple since it is not necessary to make an excessive effort to unscrew the male element (3) so as to separate it from the female element (2).

In one embodiment of the invention, the fixing system further includes radial stops (10) which prevent the filter cartridge (1) from unduly moving through the male element (3) and being introduced into the filtration equipment, as a result of an excessive pressure on the filter cartridge.

These stops (10) are projections integrated in the filter cartridge (1), which contact the male element (3), thereby preventing the filter cartridge (1) from going through the male element (3) in the event of an excessive pressure, as mentioned above.

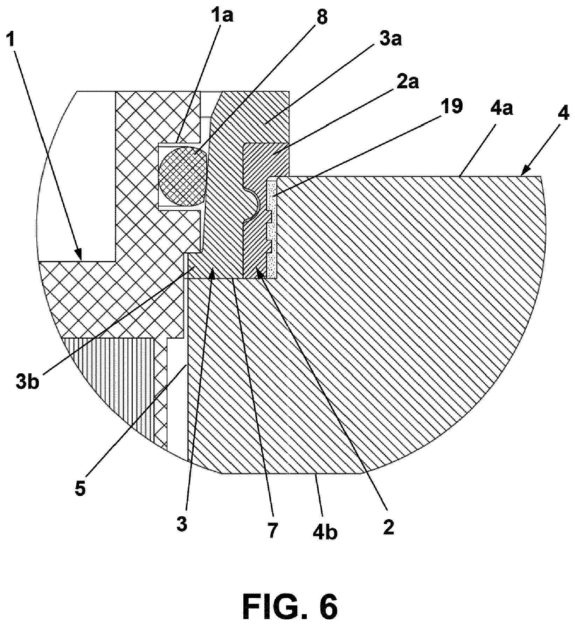

In one embodiment of the invention as shown in Figure 6, the male element (3) includes at the lower end of its inner side surface a continuous diametrical extension (3b) which is configured so that the end segment of the filter cartridge (1) is supported thereon. In this way, safety is increased to prevent the axial movement of the filter cartridge (1) towards the inner space of the filtration equipment.

Finally, to unscrew the male element (3) from the female element (2), the system of the invention has a tool (11) with which it is possible to act directly on said male element (3).

The tool (11) comprises a circular-shaped tubular body (12) with a diametrical rod (13) going through same, to the center of which a support (14) is attached by means of a screw (15) and a nut (16); wherein said support (14) is configured for being fitted on the handle (1b) of the filter cartridge (1) during use of the tool (11).

The tool (11) further includes a double radial handle (17, 17'), as well as flanges (18) located on one of the annular edges of the tubular body (12), such that during use of the tool (11), said flanges (18) are fitted in coincidence with the slots (20) of the diametrical extension (3a) of the male element (3).

Therefore, in order to disassemble the filter cartridge (1) by means of the tool (11), first, the flanges (18) of the tool (11) are fitted on the slots (20) of the diametrical extension (3a) of the male element (3) and the support (14) is placed on the handle (1b) of the filter cartridge (1); such that with the tool (11) positioned as indicated, the tool (11) is rotated in the proper direction to unscrew the male element (3) from the female element (2), driving the filter cartridge (1) and axially moving the assembly of both parts (1, 3) outwardly from the support plate (4).

With the fixing system of the present invention, operations for disassembling the filter cartridges (1) are made easier, with said filter cartridges (1) furthermore being prevented from being introduced into the equipment, completely going through the support plate (4), and the useful space of the support plate (4) being optimized.

It should be pointed out that in the system of the invention it is not necessary to oversize the through holes (5) of the support plate (4) in order to introduce a fixing head as is conventionally the case, rather said through holes (5) have the same diameter as the diameter of the filter cartridges (1), whereby in the present invention the design of the support plate (4) is optimized, allowing a larger number of filter cartridges (1) to be installed on the support plate (4).

## Claims

1. **A fixing and removal system for filter cartridges in a support plate of liquid fluid filtration equipment, characterized in that**:
- it comprises an annular female element (2) and an annular male element (3) which are configured to be assembled in coincidence with a stepped opening (5a), located around each of the through holes (5) of the support plate (4), for installing a filter cartridge (1) in the through hole (5); wherein the male element (3) has a frustoconical inner space configured to tightly fit, in a hermetically sealed manner, an end segment of the filter cartridge (1); and wherein the assembly of the female element (2) and the male element (3) is configured to be supported on a side surface (6) and a front seat surface (7) of the stepped opening (5a) of the through hole (5) of the support plate (4);
- the female element (2) and the male element (3) have circular-shaped annular structures including inner side surfaces and outer side surfaces; wherein the male element (3) is configured for being coupled inside the female element (2) by means of a threaded coupling;
- the female element (2) is configured to be in contact with at least a part of the surface of the stepped opening (5a) of the support plate (4).

2. **The fixing and removal system for filter cartridges in a support plate of liquid fluid filtration equipment** according to any one of the preceding claims, **characterized in that** the outer side surface of the female element (2) comprises a ribbing (9) and is configured to be attached to the side surface (6) of the stepped opening (5a) of the support plate (4) by means of an adhesive (19).

3. **The fixing and removal system for filter cartridges in a support plate of liquid fluid filtration equipment** according to any one of the preceding claims, **characterized in that** the female element (2) includes a continuous diametrical extension (2a) which is configured for being supported on the support plate (4), whereas the male element (3) includes a diametrical extension (3a) which is configured for being supported on the continuous diametrical extension (2a) of the female element (2); wherein the diametrical extension (3a) of the male element (3) includes slots (20).

4. **The fixing and removal system for filter cartridges in a support plate of liquid fluid filtration equipment** according to any one of the preceding claims, **characterized in that** the male element (3) includes at the lower end of its inner side surface a continuous diametrical extension (3b) which is configured so that the end segment of the filter cartridge (1) is supported thereon.

5. **The fixing and removal system for filter cartridges** according to any one of the preceding claims, **characterized in that** it further comprises a tool (11) to carry out the removal of the filter cartridges (1); wherein the tool (11) comprises at least some flanges (18) located in coincidence with a circumferential annular edge which is part of a tubular body (12) of the tool (11); and wherein the flanges (18) are configured for fitting into the slots (20) of the male element (3) during use of the tool (11) to enable rotating the male element (3).

6. **The fixing and removal system for filter cartridges** according to claim 5, **characterized in that** the tool (11) further comprises:
- a diametrical rod (13) through the inside of the tubular body (12); wherein the center of said diametrical rod (13) is attached to a support (14) by means of a screw (15) and a nut (16); and wherein said support (14) is configured for being fitted on a handle (1b) of the filter cartridge (1);
- a double radial handle (17, 17') which is externally attached to the tubular body (12).

## Patentansprüche

1. Befestigungs- und Entnahmesystem für Filterpatronen in einer Trägerplatte einer Flüssigkeitsfiltrationsanlage, **dadurch gekennzeichnet, dass**:
- es ein ringförmiges Buchsenelement (2) und ein ringförmiges Steckelement (3) umfasst, die dazu konfiguriert sind, in Übereinstimmung mit einer abgestuften Öffnung (5a) zusammengebaut zu werden, die um jedes der Durchgangslöcher (5) der Trägerplatte (4) herum angeordnet ist, um eine Filterpatrone (1) in dem Durchgangsloch (5) zu installieren; wobei das Steckelement (3) einen kegelstumpfförmigen Innenraum aufweist, der dazu konfiguriert ist, ein Endsegment der Filterpatrone (1) auf hermetisch abdichtende Weise zu umschließen; und wobei die Anordnung des Buchsenelements (2) und des Steckelements (3) dazu konfiguriert ist, auf einer Seitenfläche (6) und einer vorderen Sitzfläche (7) der abgestuften Öffnung (5a) des Durchgangslochs (5) der Trägerplatte (4) abgestützt zu werden;
- das Buchsenelement (2) und das Steckelement (3) kreisförmige ringförmige Strukturen aufweisen, die innere Seitenflächen und äußere Seitenflächen beinhalten; wobei das Steckelement (3) dazu konfiguriert ist, mittels einer Gewindekopplung in dem Buchsenelement (2) gekoppelt zu werden;
- das Buchsenelement (2) dazu konfiguriert ist, mit mindestens einem Teil der Oberfläche der abgestuften Öffnung (5a) der Trägerplatte (4) in Kontakt zu stehen.

2. Befestigungs- und Entnahmesystem für Filterpatronen in einer Trägerplatte einer Flüssigkeitsfiltrationsanlage nach einem der vorhergehenden Ansprüche, **dadurch gekennzeichnet, dass** die äußere Seitenfläche des Buchsenelements (2) eine Riffelung (9) umfasst und dazu konfiguriert ist, mittels eines Klebstoffs (19) an der Seitenfläche (6) der abgestuften Öffnung (5a) der Trägerplatte (4) befestigt zu werden.

3. Befestigungs- und Entnahmesystem für Filterpatronen in einer Trägerplatte einer Flüssigkeitsfiltrationsanlage nach einem der vorhergehenden Ansprüche, **dadurch gekennzeichnet, dass** das Buchsenelement (2) eine durchgehende diametrale Verlängerung (2a) beinhaltet, die dazu konfiguriert ist, auf der Trägerplatte (4) getragen zu werden, während das Steckelement (3) eine diametrale Verlängerung (3a) beinhaltet, die dazu konfiguriert ist, auf der durchgehenden diametralen Verlängerung (2a) des Buchsenelements (2) getragen zu werden; wobei die diametrale Verlängerung (3a) des Steckelements (3) Schlitze (20) beinhaltet.

4. Befestigungs- und Entnahmesystem für Filterpatronen in einer Trägerplatte einer Flüssigkeitsfiltrationsanlage nach einem der vorhergehenden Ansprüche, **dadurch gekennzeichnet, dass** das Patronenelement (3) am unteren Ende seiner inneren Seitenfläche eine durchgehende diametrale Verlängerung (3b) beinhaltet, die so konfiguriert ist, dass das Endsegment der Filterpatrone (1) darauf abgestützt wird.

5. Befestigungs- und Entnahmesystem für Filterpatronen nach einem der vorhergehenden Ansprüche, **dadurch gekennzeichnet, dass** es des Weiteren ein Werkzeug (11) zur Durchführung der Entnahme der Filterpatronen (1) umfasst; wobei das Werkzeug (11) mindestens einige Flansche (18) umfasst, die in Übereinstimmung mit einer ringförmigen Umfangskante angeordnet sind, die Teil eines rohrförmigen Körpers (12) des Werkzeugs (11) ist; und wobei die Flansche (18) dazu konfiguriert sind, während der Verwendung des Werkzeugs (11) in die Schlitze (20) des Steckelements (3) zu passen, um das Drehen des Steckelements (3) zu ermöglichen.

6. Befestigungs- und Entnahmesystem für Filterpatronen nach Anspruch 5, **dadurch gekennzeichnet, dass** das Werkzeug (11) des Weiteren umfasst:
- eine diametrale Stange (13) durch das Innere des rohrförmigen Körpers (12); wobei die Mitte der diametralen Stange (13) mittels einer Schraube (15) und einer Mutter (16) an einem Träger (14) befestigt ist; und wobei der Träger (14) dazu konfiguriert ist, an einem Griff (1 b) der Filterpatrone (1) angebracht zu werden;
- einen doppelten Radialgriff (17, 17'), der außen an dem rohrförmigen Körper (12) befestigt ist.

## Revendications

1. Système de fixation et d'extraction pour cartouches filtrantes dans une plaque de support d'un équipement de filtration de fluide liquide, **caractérisé en ce que** :
il comprend un élément annulaire femelle (2) et un élément annulaire mâle (3) qui sont configurés pour être assemblés d'une manière qui coïncide avec une ouverture par palier (5a) située autour de chacun des trous débouchants (5) de la plaque de support (4), pour installer une cartouche filtrante (1) dans le trou débouchant (5) ; dans lequel l'élément mâle (3) a un espace interne tronconique configuré pour bien s'adapter, d'une manière hermétiquement étanche, à un segment d'extrémité de la cartouche filtrante (1) ; et dans lequel l'ensemble de l'élément femelle (2) et de l'élément mâle (3) est configuré pour être supporté sur une surface latérale (6) et une surface de siège avant (7) de l'ouverture par palier (5a) du trou débouchant (5) de la plaque de support (4) ;
l'élément femelle (2) et l'élément mâle (3) ont des structures annulaires de forme circulaire comprenant des surfaces latérales internes et des surfaces latérales externes ; dans lequel l'élément mâle (3) est configuré pour être couplé à l'intérieur de l'élément femelle (2) au moyen d'un couplage fileté ;
l'élément femelle (2) est configuré pour être en contact avec au moins une partie de la surface de l'ouverture par palier (5a) de la plaque de support (4).

2. Système de fixation et d'extraction pour cartouches filtrantes dans une plaque de support d'un équipement de filtration de fluide liquide selon l'une quelconque des revendications précédentes, **caractérisé en ce que** la surface latérale externe de l'élément femelle (2) comprend un nervurage (9) et est configurée pour être fixée à la surface latérale (6) de l'ouverture par palier (5a) de la plaque de support (4) au moyen d'un adhésif (19).

3. Système de fixation et d'extraction pour cartouches filtrantes dans une plaque de support d'un équipement de filtration de fluide liquide selon l'une quelconque des revendications précédentes, **caractérisé en ce que** l'élément femelle (2) comprend une extension diamétrale continue (2a) qui est configurée pour être supportée sur la plaque de support (4), alors que l'élément mâle (3) comprend une extension diamétrale (3a) qui est configurée pour être supportée sur l'extension diamétrale continue (2a) de l'élément femelle (2) ; dans lequel l'extension diamétrale (3a) de l'élément mâle (3) comprend des fentes (20).

4. Système de fixation et d'extraction pour cartouches filtrantes dans une plaque de support d'un équipement de filtration de fluide liquide selon l'une quelconque des revendications précédentes, **caractérisé en ce que** l'élément mâle (3) comprend, au niveau de l'extrémité inférieure de sa surface latérale interne, une extension diamétrale continue (3b) qui est configurée de sorte que le segment d'extrémité de la cartouche filtrante (1) est supporté sur cette dernière.

5. Système de fixation et d'extraction pour cartouches filtrantes selon l'une quelconque des revendications précédentes, **caractérisé en ce qu'**il comprend en outre un outil (11) pour réaliser l'extraction des cartouches filtrantes (1) ; dans lequel l'outil (11) comprend au moins certaines brides (18) positionnées, d'une manière qui coïncide avec un bord annulaire circonférentiel qui fait partie d'un corps tubulaire (12) de l'outil (11) ; et dans laquelle les brides (18) sont configurées pour s'adapter dans les fentes (20) de l'élément mâle (3) pendant l'utilisation de l'outil (11) pour permettre la rotation de l'élément mâle (3).

6. Système de fixation et d'extraction pour cartouches filtrantes selon la revendication 5, **caractérisé en ce que** l'outil (11) comprend en outre :
une tige diamétrale (13) à travers l'intérieur du corps tubulaire (12) ; dans lequel le centre de ladite tige diamétrale (13) est fixé sur un support (14) au moyen d'une vis (15) et d'un écrou (16) ; et dans lequel ledit support (14) est configuré pour être monté sur une poignée (1b) de la cartouche filtrante (1) ;
une double poignée radiale (17, 17') qui est fixée, à l'extérieur, sur le corps tubulaire (12).
